## Europäisches Patentamt

## European Patent Office

## Office européen des brevets

(19)

(11) Veröffentlichungsnummer: **0 061 107**

**A1**

(12) # EUROPÄISCHE PATENTANMELDUNG

(21) Anmeldenummer: **82102043.5**

(22) Anmeldetag: **13.03.82**

(51) Int. Cl.³: **F 16 D 65/02**
**F 16 D 69/00**

(30) Priorität: **14.03.81 DE 3109939**

(43) Veröffentlichungstag der Anmeldung:
**29.09.82 Patentblatt 82/39**

(84) Benannte Vertragsstaaten:
**AT BE CH DE FR GB IT LI NL SE**

(71) Anmelder: **Stahl, Kurt**
**Wahner Strasse 19-21**
**D-5000 Köln 21(DE)**

(72) Erfinder: **Stahl, Kurt**
**Wahner Strasse 19-21**
**D-5000 Köln 21(DE)**

(74) Vertreter: **Langmaack, Jürgen et al,**
**Patentanwälte Dipl.-Ing. Alfred Maxton Dipl.-Ing. Jürgen**
**Langmaack Pferdmengesstrasse 50**
**D-5000 Köln 51(DE)**

(54) Reibbacke für eine Scheibenbremse.

(57) Die Erfindung betrifft eine Reibbacke, bei der, bezogen auf die Hauptdrehrichtung (13), zumindest die einlaufseitige Kante (14) des Reibmaterialblockes (16) wenigstens mit dem größeren Teil ihrer Länge in Hauptdrehrichtung (13) geneigt ausgerichtet ist.

Fig.2

EP 0 061 107 A1

Bezeichnung: Reibbacke für eine Scheibenbremse

Beschreibung:

Die Erfindung betrifft eine Reibbacke für eine Scheibenbremse mit ringförmiger Reibfläche an der Bremsscheibe, die eine Trägerplatte aufweist, die mit Mitteln zum Festlegen der Reibbacke am Bremssattel versehen ist und auf der ein Reibmaterialblock angeordnet ist.

Die Leistungsfähigkeit einer Scheibenbremse, d. h. der erzielbare Reibbeiwert bei möglichst langer Lebensdauer der Reibbacke und geringstem Verschleiß an der Bremsscheibe hängt nicht allein von der Zusammensetzung des verwendeten Reibmaterials ab, sondern wird auch durch den konstruktiven Aufbau der Reibbacke insgesamt bestimmt. Insbesondere bei hochbelasteten Scheibenbremsen, beispielsweise bei Scheibenbremsen an Kraftfahrzeugen, treten infolge der Wärmeentwicklung beim Bremsvorgang eine Reihe von nachteiligen Einflüssen auf, die sich in einer Verminderung bzw. in Schwankungen der Bremsleistung bemerkbar machen. Hier ist zum einen das sogenannte Belagfading zu nennen, d. h. die Abnahme des Reibbeiwertes des verwendeten Reibmaterials bei zunehmender Temperatur und eine ungleichmäßige Anlage der Reibbacke an der Reibfläche der Bremsscheibe, die durch unterschiedliche Wärmedehnungen der Reibbacke während des Bremsvorganges bewirkt werden. Dies führt bei den üblichen Reibmaterialzusammensetzungen in der Regel zu einem erhöhten und ungleichmäßigen Verschleiß des Reibmaterialblocks, wodurch die Lebensdauer einer derartigen Reibbacke verkürzt und gleichzeitig auch die erzielbare Bremsleistung nachteilig beeinflußt wird.

Die bisher gebräuchlichen Reibbacken waren im wesentlichen in Form eines Rechteckes oder in Form eines Kreisringausschnittes geformt, wobei sich im letztgenannten Fall in ihrer Form verhältnismäßig langgestreckte Reibbacken ergaben.

Der Erfindung liegt nun die Aufgabe zugrunde, die Leistungsfähigkeit einer Scheibenbremse sowohl hinsichtlich der erzielbaren Bremsleistung als auch hinsichtlich einer Verminderung des Verschleißes am Reibbelag und/oder an der Bremsscheibe zu verbessern.

Überraschend hat sich gezeigt, daß eine Verbesserung der Leistungsfähigkeit auch über eine Veränderung der geometrischen Form der Reibbacke zumindest in ihrem an der Reibfläche der Bremsscheibe zur Anlage kommenden Bereich erzielt werden kann. Die erfindungsgemäße Lösung ist hierbei dadurch gekennzeichnet, daß bezogen auf eine Tangente an den mittleren Umfangskreis der Reibfläche (Bezugstangente) die beiden sich quer über die Reibfläche erstreckenden Kanten des Reibmaterialblocks mit Abstand zu beiden Seiten des durch den Berührungspunkt der Bezugstangente mit dem mittleren Umfangskreis gezogenen Radius verlaufen und daß bezogen auf die Hauptdrehrichtung der Bremsscheibe zumindest die einlaufseitige Kante des Reibmaterialblockes wenigstens mit dem größeren Teil ihrer Länge im wesentlichen unter einem Winkel ß < 90° gegenüber der Bezugstangente in Hauptdrehrichtung geneigt ausgerichtet ist. Vergleichsversuche mit Reibbacken, die in ihrem Aufbau, d. h. Art der Trägerplatte und Zusammensetzung des Reibmaterials identisch waren, haben gezeigt, daß die erfindungsgemäße Gestaltung gegenüber den bisher gebräuchlichen Gestaltungen von Reibbacken wesentliche Verbesserungen zeigt. Dies macht sich zum einen dadurch bemerkbar, daß die an der Reibfläche der Bremsscheibe zur Anlage kommende Fläche des Reibmaterialblockes gleichmäßig abgetragen wird, so daß auch nach längerer Betriebszeit eine nahezu ebene Anlagefläche vorhanden ist, während bei den bisher gebräuchlichen Formen durch ungleichmäßige Abnutzung sich gewölbte Anlageflächen ergeben. Da bei einer ebenen Anlagefläche der Reibmaterialbacke örtliche Überbeanspruchungen beim Bremsvorgang vermieden werden, ergibt sich darüberhinaus eine spürbare Verschleißminderung des Reibmaterialblockes, so daß die Lebensdauer einer derartigen Reibbacke erhöht ist. Die Einlaufkante des Reibmaterialblockes wird üblicherweise geradlinig geformt sein und sich über die ganze Breite der Reibfläche der Bremsscheibe erstrecken. Die erfindungsgemäßen Vorteile lassen sich aber auch dann erzielen, wenn die Einlaufkante gekrümmt verläuft, wobei es dann darauf ankommt, daß der größere Teil ihrer Länge in Hauptdrehrichtung gegenüber der Bezugstangente geneigt ausgerichtet ist. Erfindungsgemäß beträgt der Neigungswinkel ß gegenüber der Bezugstangente 85 - 45°, vorzugsweise 70 - 55°.

In einer bevorzugten Ausgestaltung der Erfindung ist vorgesehen, daß auch die auslaufseitig sich quer über die Reibfläche der Bremsscheibe erstreckende Kante des Reibmaterialblockes gegenüber der Bezugstangente wenigstens mit dem größeren Teil ihrer Länge im wesentlichen in Hauptdrehrichtung geneigt ausgebildet ist.

In einer bevorzugten Ausgestaltung der Erfindung ist ferner vorgesehen, daß die Einlaufkante und die Auslaufkante des Reibmaterialblockes hinsichtlich ihrer Neigung im wesentlichen parallel zueinander verlaufen. Diese Ausgestaltung hat den Vorteil, daß trotz der sich gegenüber den herkömmlichen Formen von Reibbacken ergebenden Asymmetrie die erfindungsgemäßen Reibbacken auf beiden Seiten der Bremsscheibe eingesetzt werden können, ohne daß hier eine Unterscheidung zwischen "rechter" und "linker" Seite erforderlich wäre. Dies ist insbesondere dann der Fall, wenn auch die beiden anderen Kanten des Reibmaterialblockes parallel zueinander verlaufen und geradlinig ausgebildet sind, so daß bei einer Trägerplatte, die im wesentlichen die gleiche Umfangskontur wie der Reibmaterialblock aufweist, die Reibbacke insgesamt die Form eine Rhombus aufweist, der dann durch einen einfachen Wendevorgang auf beiden Seiten der Bremsscheibe in die entsprechende Aufnahme des Bremssattels eingeschoben werden kann.

In einer besonders vorteilhaften Ausgestaltung der Erfindung ist schließlich vorgesehen, daß die Trägerplatte in an sich bekannter Weise im wesentlichen aus einer Hartkeramikplatte mit einer Schutzabdeckung aus Metall für die Rückenfläche besteht. Bei einer derart ausgebildeten Reibbacke kommen die sich aus der besonderen geometrischen Form ergebenden Vorteile verstärkt zur Geltung, da eine Trägerplatte aus Hartkeramik gegenüber den üblichen Trägerplatten aus Metall nicht nur eine höhere Steifigkeit aufweist, sondern sich auch nicht unter den Einfluß inhomogener Temperaturverteilungen in der Reibbacke verwirft und somit die mit Hilfe der geometrischen Gestaltung zu erzielenden Vorteile noch verstärkt werden.

Die Erfindung wird anhand schematischer Zeichnungen von Ausführungsbeispielen näher erläutert. Es zeigen:

Fig. 1    zwei unterschiedliche Reibbackenformen entsprechend dem Stande der Technik,

Fig. 2    eine erfindungsgemäße Ausführungsform,

Fig. 3    eine bevorzugte Ausführungsform,

Fig. 4    einen Schnitt durch die Reibbacke gemäß der Linie IV - IV in Fig. 3,

Fig. 5    eine weitere Ausgestaltungsform für eine erfindungsgemäße Reibbacke,

Fig. 6    eine Einbauweise entsprechend der Lehre der Erfindung für eine Reibbacke in herkömmlicher Form,

Fig. 7    eine Anordnung für eine Schienenbremse.

Fig. 8    schematisch die Anordnung der Ausführungsform gemäß Fig. 2 in einer Kraftfahrzeugscheibenbremse.

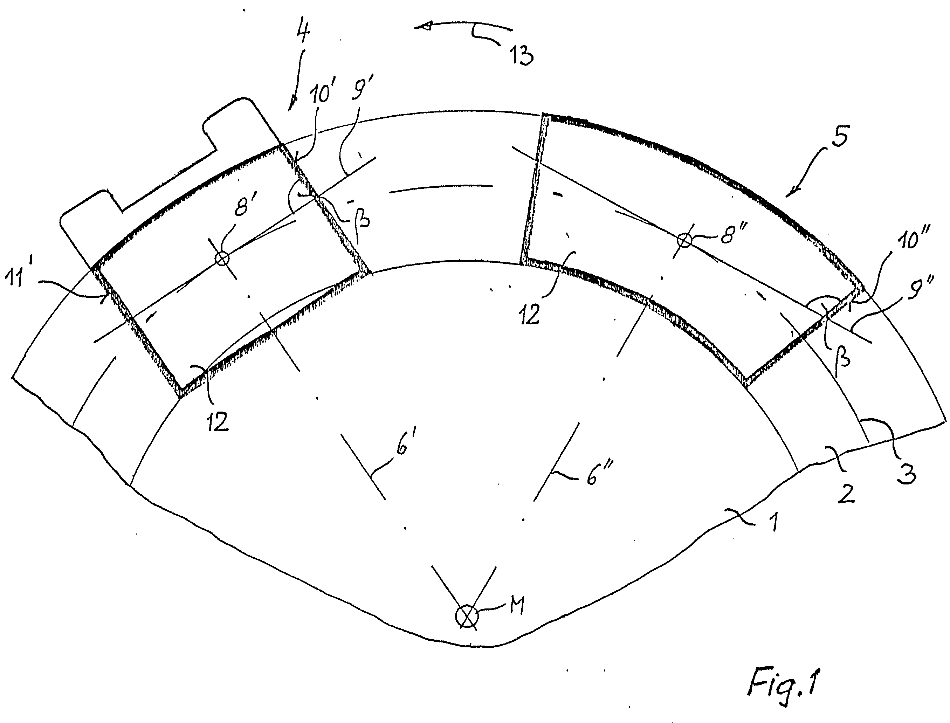

In Fig. 1 ist eine Bremsscheibe 1 mit ringförmiger Reibfläche 2 angedeutet. Für die Erläuterung der unterschiedlichen Reibbackenformen ist die Darstellung so gewählt, daß die Bremsscheibe als "durchsichtig" anzusehen ist, so daß die einzelnen Reibbacken in einer Aufsicht auf die an der Bremsfläche 2 zur Anlage kommenden Fläche dargestellt sind. Da es in erster Linie auf die Kontur des an der Reibfläche 2 zur Anlage kommenden Reibmaterialblockes ankommt, ist diese Kontur jeweils durch einen stark ausgezogenen Strich hervorgehoben. Ferner ist in allen Figuren auch der mittlere Umfangskreis 3 der Reibfläche eingezeichnet.

In Fig. 1 sind zwei Ausführungsbeispiele für bisher gebräuchliche Reibbackenformen dargestellt. Mit 4 ist hierbei eine Reibbacke gekennzeichnet, deren Reibmaterialblock eine in etwa rechteckige Kontur aufweist, während mit 5 die Kontur eines Reibmaterialblockes dargestellt ist, der einem Kreisringausschnitt entspricht. Beide Reibbackenformen sind jeweils symmetrisch zur zugehörigen Radiuslinie 6' bzw.6". Für derartige Reibbackenkonturen ist die Drehrichtung der Bremsscheibe während des Bremsvorganges unbeachtlich. Zumindest für Scheibenbremsen an Kraftfahrzeugen läßt sich jedoch eine Hauptdrehrichtung der Bremsscheibe definieren, nämlich die Drehrichtung der Vorwärtsfahrt. Für die nachstehenden Erläuterungen wird eine Hauptdrehrichtung der Bremsscheibe 1 in Richtung des Pfeiles 13 angenommen.

Zieht man nun durch den Schnittpunkt 8' des Radius 6' mit dem Umfangskreis 3 eine Tangente 9' (Bezugstangente), dann verläuft die sich quer über die Reibfläche 2 erstreckende einlaufseitige Kante 10 des Reibblockes 12 unter einem Winkel ß = 90° zur Bezugstangente 9'. Auch die auslaufseitige Kante 11 des Reibblockes 12 verläuft unter einem Winkel von 90° zur Bezugstangente.

Bei der Ausführungsform 5 verläuft die einlaufseitige Kante 10' zur entsprechenden Bezugstangente 9" unter einem Winkel ß' > 90°, bezogen auf die Drehrichtung 13.

Es muß nun aufgrund verschiedener Erscheinungen an Bremsen mit den herkömmlich ausgerüsteten Reibbacken (Verschleißbild an Bremsscheibe und Reibbacke, Veränderung des Reibwertes unter Temperatureinfluß etc.) davon ausgegangen werden, daß sich durch den Bremsvorgang im Reibmaterialblock ein Temperaturprofil aufbaut, das für die festgestellten Nachteile mit ursächlich sein muß. Da diese Nachteile trotz vielfältiger Bemühungen insbesondere hinsichtlich der Zusammensetzung des Reibmaterialbelages nicht behoben werden konnten, geht die Erfindung davon aus, daß hier die Geometrie des Reibmaterialblockes, genauer gesagt die Geometrie der Anlagefläche des Reibmaterialblockes, bedeutsam ist, da die Umfangsgeschwindigkeit der Innenkante der Reibfläche kleiner ist als die Umfangsgeschwindigkeit der Außenkante der Reibfläche und somit zwangsläufig ein ungleichmäßiges Temperaturprofil auftreten muß, und daß für die Beeinflussung die Lage der einlaufseitigen Kante des Reibmaterialblockes von entscheidender Bedeutung ist.

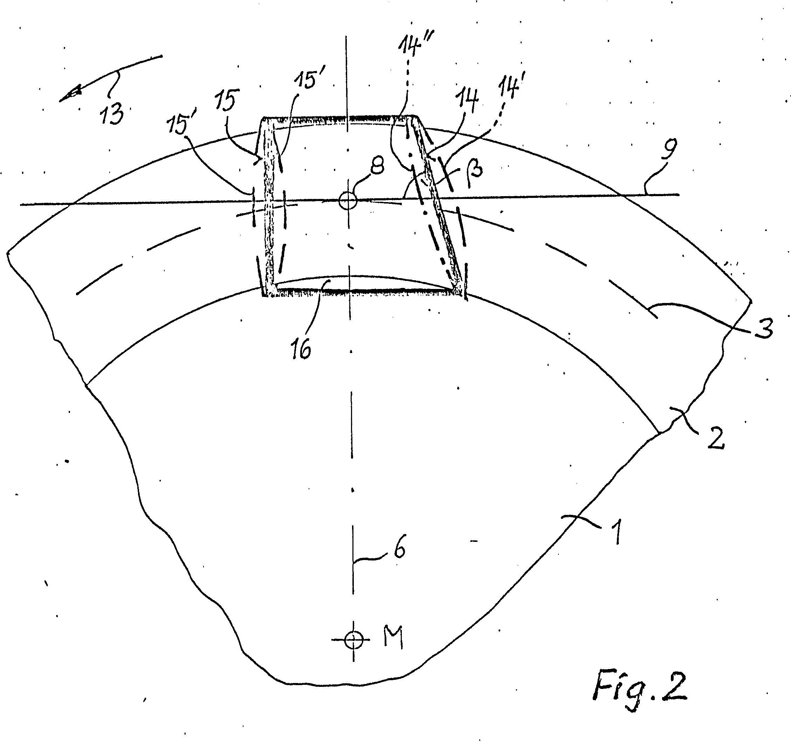

In Fig. 2 ist nun die Kontur eines Reibmaterialblockes entsprechend der Lehre der Erfindung dargestellt. Bei diesem Ausführungsbeispiel ist die einlaufseitige Kante 14 des Reibmaterialblockes 16 gegenüber der Bezugstangente 9 unter einem Winkel $\beta < 90°$ in Hauptdrehrichtung geneigt ausgerichtet. Die auslaufseitige Kante 15 ist bei diesem Ausführungsbeispiel parallel zum Radius 6 durch den Berührungspunkt 8 der Bezugstangente 9 an den mittleren Umfangskreis 3 ausgerichtet, da der Verlauf der auslaufseitigen Kante in Bezug auf den zu erzielenden Effekt von untergeordneter Bedeutung ist. Diese Ausrichtung der einlaufseitigen Kante 14 führt zu einer Vergleichmäßigung des Temperaturprofils im Reibmaterialblock, so daß insgesamt eine bessere Bremsleistung erzielt wird. Hierbei ist es gleichgültig, ob die einlaufseitige Kante geradlinig verläuft oder aber, wie durch die gestrichelte Linie 14' bzw. 14" angedeutet, einen gekrümmten Verlauf aufweist. Entscheidend ist, daß die einlaufseitige Kante mit dem größeren Teil ihrer Länge im wesentlichen unter einem Winkel $\beta < 90°$ gegenüber der Bezugstangente 9 in Drehrichtung geneigt ausgerichtet ist. Die auslaufseitige Kante 15 kann dementsprechend auch gekrümmt ausgebildet sein. Da es nur auf die Kontur des Reibmaterialblockes ankommt, kann die Trägerplatte für den Reibmaterialblock beliebig gestaltet sein. Dementsprechend ist in Fig. 2 die Trägerplatte, mit der die Reibbacke im zugehörigen Bremssattel festgelegt wird, nicht dargestellt. Die Trägerplatte kann hierbei beispielsweise die für die Ausführungsform 4 (Fig. 1) angedeutete Form aufweisen, d. h. sie kann aus einer rechteckigen Platte bestehen, die mit entsprechenden Ansätzen zur Festlegung im Bremssattel versehen ist.

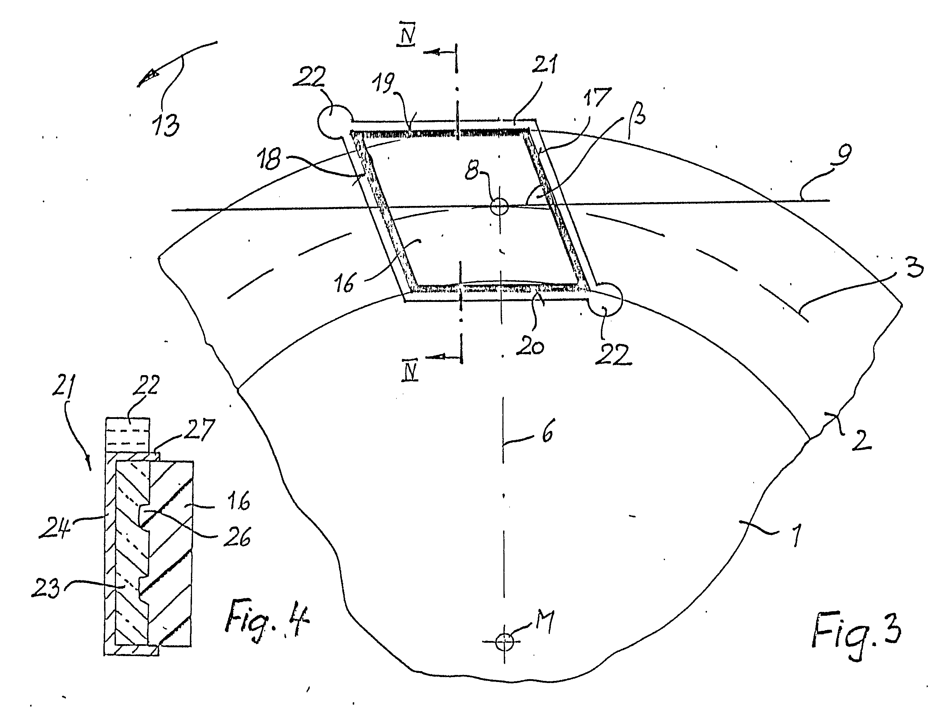

Da die Ausführungsform gemäß Fig. 2 aufgrund ihrer Unsymmetrie für Herstellung, Lagerung und Einbau besondere Vorkehrungen erfordert, um sicherzustellen, daß die Reibbacken entsprechend dem Vorschlag der Erfindung "richtig", d. h. mit in Hauptdrehrichtung geneigter einlaufseitiger Kante eingebaut werden, ist in Fig. 3 eine bevorzugte Ausführungsform der Erfindung dargestellt, bei der dieses Erfordernis wegfällt. Der Reibmaterialblock 16 weist hierbei die Form eines Rhombus auf, so daß auch hier die einlaufseitige Kante 17 gegenüber der zugehörigen Bezugstangente 9 in Hauptdrehrichtung geneigt ausgerichtet ist. Die auslaufseitige Kante 18 verläuft dementsprechend parallel zur einlaufseitigen Kante 17 ebenso wie die beiden anderen Kanten 19 und 20 parallel zueinander verlaufen.

Die Trägerplatte 21 weist hierbei ebenfalls die Kontur eines Rhombus auf, so daß die Aufnahme für die Reibbacke des Bremssattels entsprechend gestaltet sein muß. Dies hat den Vorteil, daß wie bisher üblich nur eine Reibbackenform hergestellt zu werden braucht, da bei entsprechender Anordnung der Befestigungsmittel 22, die in der Regel in Form von Ansätzen mit Löchern zur Aufnahme von Bolzen ausgebildet sind, trotz der Asymmetrie in Bezug auf den Radius 6 dennoch ein symmetrisches Gebilde gegeben ist, daß durch einfaches Umsetzen auf beiden Seiten der Bremsscheibe eingebaut werden kann.

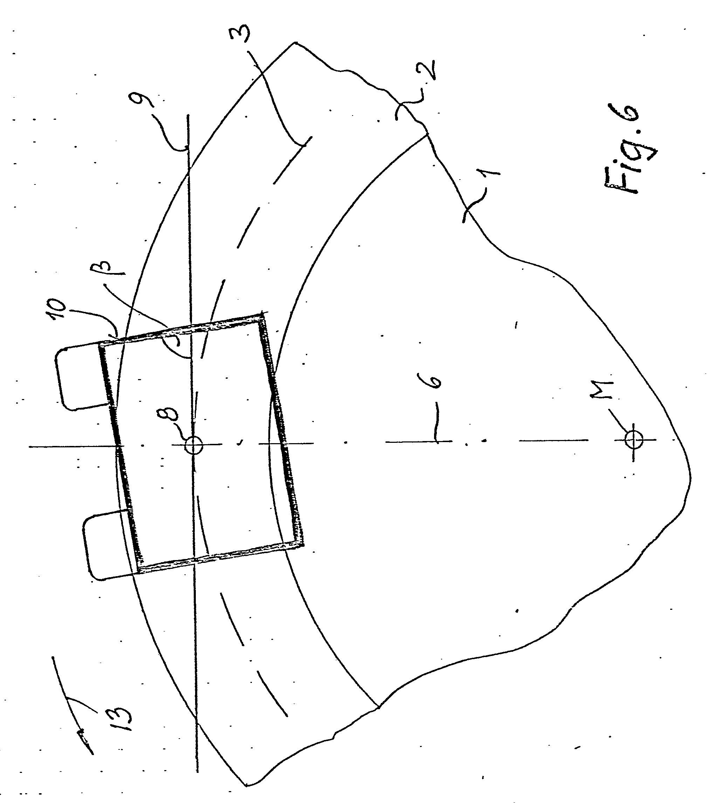

In Fig.4 ist ein Schnitt durch die Reibbacke gemäß Fig. 3 dargestellt, der eine bevorzugte Ausgestaltung auch der Trägerplatte erkennen läßt. Während die herkömmlichen Trägerplatten aus einer Stahlplatte bestehen, besteht die Trägerplatte 21 aus einer Keramikplatte 23, die auf ihrer Rückenfläche und den umlaufenden schmalen Stirnflächen mit einer Metallabdeckung 24, vorzugsweise einer Abdeckung aus Aluminiumdruckguß, versehen ist. Auf der Vorderseite ist der Reibmaterialblock 16 aufgebracht, der in entsprechenden Vertiefungen 26 der Keramikplatte 23 sowie durch einen umlaufenden Steg 27 der Metallabdeckung gehalten ist.

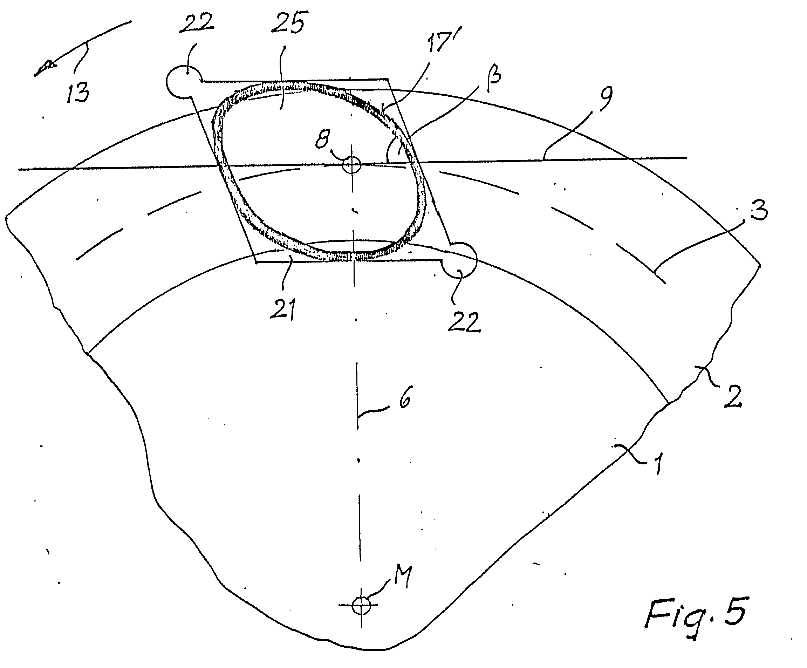

In Fig. 5 ist eine Fortbildung der Form des Reibblockes entsprechend Fig. 3 dargestellt. Die Kontur der an der Reibfläche 2 zur Anlage kommenden Fläche des Reibmaterialblockes 25 weist hierbei in etwa die Form eines Rhombus mit abgerundeten Ecken bzw. die Form einer etwas deformierten Ellipse auf. Diese Formgebung berücksichtigt in etwa das sich einstellende Verschleißbild am Reibmaterialblock, so daß auch nach längerer Betriebszeit die einlaufseitige Kante 17' des Reibmaterialblockes 23 scharfkantig bleibt, so daß hier das sogenannte "Naßverhalten" noch verbessert wird.

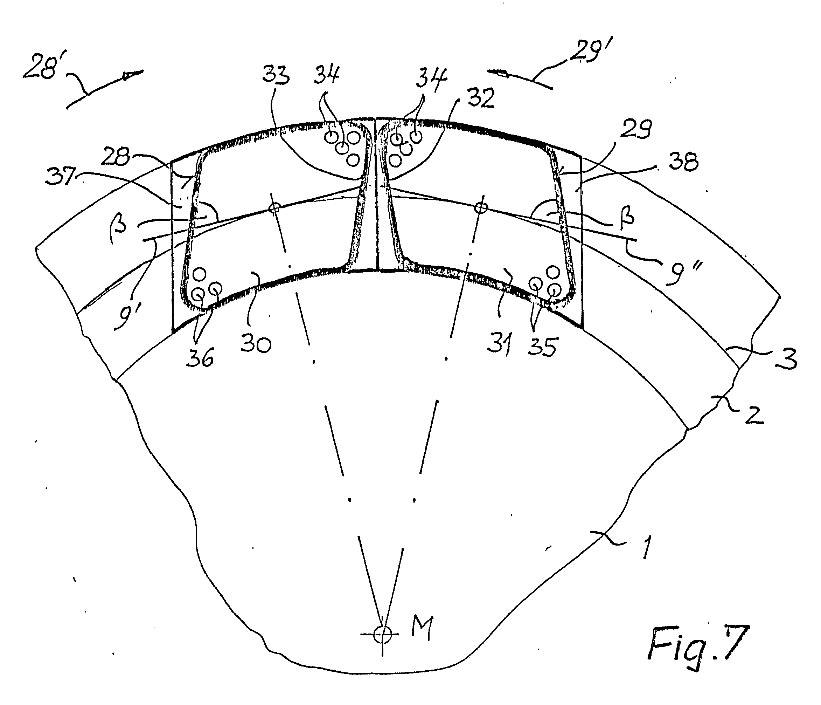

Die Lehre der Erfindung läßt sich auch mit Reibblöcken verwirklichen, die die herkömmliche Geometrie aufweisen. Dies ist anhand von Fig. 6 für die Ausführungsform 4 in Fig. 1 dargestellt. Hierzu ist es lediglich erforderlich, daß die Reibbacke abweichend von der bisherigen Einbauweise schräg eingebaut wird, so daß die einlaufseitige Kante 10" unter einem Winkel ß $<$ 90° gegenüber der Bezugstangente 9/ausgerichtet ist.

Während vorstehend die erfindungsgemäße Lehre für Kraftfahrzeugscheibenbremsen beschrieben worden ist, die durch eine bevorzugte Drehrichtung gekennzeichnet sind, wird anhand von Fig. 7 erläutert, daß die Lehre der Erfindung auch für solche Scheibenbremsen verwirklicht werden kann, die nicht durch eine Hauptdrehrichtung gekennzeichnet sind, wie dies beispielsweise bei Eisenbahnbremsen der Fall ist, die für beide Drehrichtungen gleich wirksam sein müssen. Da für Schienenbremsen die Reibbacken zweiteilig ausgeführt werden, läßt sich dies in
einfacher Weise verwirklichen. Hierzu werden zwei Reibbacken mit rhombusförmig gestalteten Reibblöcken spiegelsymmetrisch zueinander in der Aufnahme des Bremssattels angeordnet, so daß die jeweilige Einlaufkante
28 bzw. 29 der Gesamtanordnung wiederum unter einem
Winkel ß < 90° gegenüber der zugehörigen Bezugstangente
9' bzw. 9" geneigt ist, wenn die jeweilige Kante die
Einlaufkante darstellt. Die zugehörige Hauptdrehrichtung ist jeweils durch den Pfeil 28' bzw. 29' dementsprechend gekennzeichnet. Bei einer angenommenen Hauptdrehrichtung in Richtung des Pfeiles 28' ist nun die
Einlaufkante 28 des Reibblockes 30 entsprechend der
Lehre richtig ausgerichtet. Dies gilt jedoch nicht für
die Kante 32 des Reibblockes 31 und umgekehrt bei einer
Drehrichtung in Richtung des Pfeiles 29' für die Kante
33 des Reibblockes 30. Da nun entsprechend der Lehre
der Erfindung die Ausrichtung des einlaufseitigen Bereiches von entscheidender Bedeutung ist, kann der gewünschte Effekt dennoch dadurch erreicht werden, daß
für den Reibblock 31 in dem für die Drehrichtung 28'
zugeordneten Bereich der Kante 32 einige Ausnehmungen
34 in das Reibmaterial eingearbeitet werden, wobei die
Ausnehmungen, vorzugsweise Bohrungen, so gestaltet sind,
daß sie nur zur Reibfläche 2 der Bremsscheibe 1 hin
offen sind. Die Ausnehmungen 34 befinden sich hierbei nur in dem außen liegenden Eckenbereich des Reibmaterialblockes 31.

Umgekehrt ist im Bereich der Kante 33 des Reibmaterialblockes 30 für die Drehrichtung entsprechend Pfeil 29' eine entsprechende Anordnung von Ausnehmungen 34 vorgesehen. Entsprechend sind im Bereich der zugehörigen Einlaufkanten auf der zur Drehachse M hin liegenden Seite der Reibblöcke Ausnehmungen 35 bzw. 36 angeordnet, so daß für die Gesamtanordnung, bei einer angenommenen Drehrichtung entsprechend Pfeil 28' die Einlaufkante 28 des Reibmaterialblockes 30 sowie der durch die Ausnehmungen 34 reduzierte Einlaufbereich der Kante 32 des Blockes 31 sowie die durch die Ausnehmungen 35 im Bereich der die Auslaufkante der Gesamtanordnung bildende Kante 29 des Reibblockes 31 beim Bremsvorgang zusammenwirken. Für eine Drehrichtung entsprechend Pfeil 29' gilt dann die umgekehrte Anordnung. Mit einer derartigen Ausbildung läßt sich auch für Scheibenbremsen ohne bevorzugte Drehrichtung der gewünschte Ausgleich des Temperaturprofils und damit eine Leistungsverbesserung erzielen. Zweckmäßigerweise sind auch hier die Trägerplatten 37, 38 für die Reibmaterialblöcke aus Hartkeramik mit Metallummantelung hergestellt. Die Trägerplatten sind im wesentlichen entsprechend dem Schnitt gemäß Fig. 4 gestaltet, d. h. sie weisen ebenfalls auf ihrer dem Belag zugekehrten Seite Vertiefungen auf, in denen der Belag formschlüssig verankert ist.

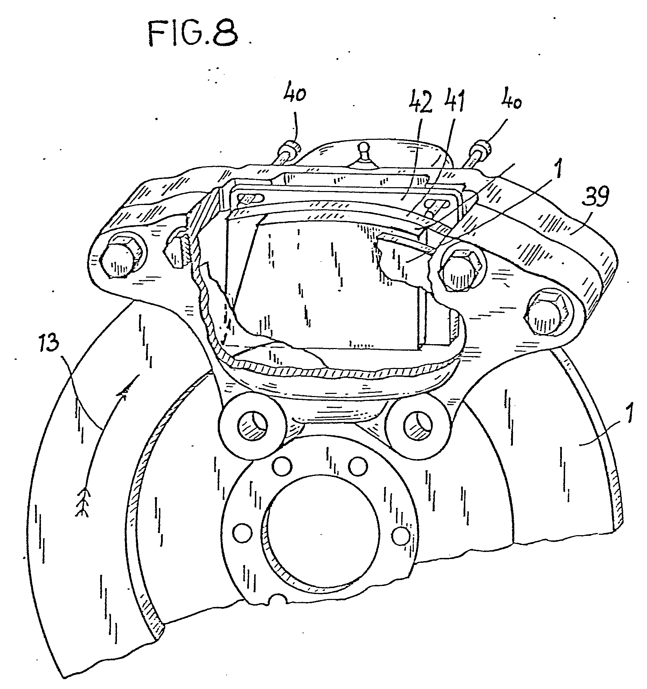

In Fig. 8 ist schematisch die Anordnung einer Reibbacke gemäß Fig. 2 in einer Kraftfahrzeugschreibenbremse dargestellt. Eine derartige Scheibenbremse weist üblicherweise eine mit dem abzubremsenden Rad verbundene Bremsscheibe 1 auf, der ein mit den feststehenden Teilen der Radaufhängung verbundener Bremssattel 39 zugeordnet ist. Der Bremssattel 39 ist auf der dem Betrachter zugekehrten Seite ebenso wie der im Sattelbereich befindliche Teil der Bremsscheibe 1 ausgebrochen, damit die dem Betrachter zugekehrte Fläche des an der Bremsscheibe 1 zur Anlage kommenden Reibmaterialblockes 16 in Bezug auf die Gesamtanordnung sichtbar ist. Dementsprechend ist auch der dem vorderen ausgebrochenen Teil des Bremssattels 39 zugeordnete Reibmaterialblock aus Gründen der besseren Darstellung ebenfalls weggelassen. Der Reibmaterialblock 16 ist in bekannter Weise durch die Sicherungsbolzen 40 im Bremssattel 39 gehalten.

Bei einer Hauptdrehrichtung des mit der Bremsscheibe 1 verbundenen Rades in Richtung des Pfeiles 13, wie sie bei der Vorwärtsfahrt des Kraftfahrzeuges gegeben ist, ist die einlaufseitige Kante 14 des Reibmaterialblockes 16 in Richtung des Pfeiles 13 gesehen zurückgeneigt, wie dies an Hand von Fig. 2 ausführlich beschrieben ist. Bei dem hier dargestellten Beispiel ist der Reibmaterialblock 16 noch mit einer Trägerplatte 41 üblicher Bauart und Größe verbunden. Die Trägerplatte ist mit ihren Befestigungsmitteln 42 durch die Sicherungsbolzen 40 festgelegt.

Dies zeigt, daß auch herkömmliche Bremsen in der Regel auf die erfindungsgemäße Reibbackenform ohne konstruktive Änderungen am Bremssattel umgerüstet werden können.

Maxton · Maxton · Langmaack

0061107
Patentanwälte

Patentanwälte Maxton & Langmaack · Pferdmengesstr. 50 · 5000 Köln 51

Robert Brede (1895-1943)
Alfred Maxton sr. (1943-1978)
Alfred Maxton
Jürgen Langmaack
Diplom-Ingenieure

zugelassen bei dem
Europäischen Patentamt

5000 **Köln** 51

Anmelder: Kurt Stahl

Wahner Str. 19 - 21

5000 Köln 21

Unsere Zeichen
872 pg 811

Datum
13.03.81

Bezeichnung: Reibbacke für eine Scheibenbremse

Ansprüche:

1. Reibbacke für eine Scheibenbremse mit ringförmiger Reibfläche an der Bremsscheibe, die eine Trägerplatte aufweist, die mit Mitteln zum Festlegen der Reibbacke am Bremssattel versehen ist und auf der ein Reibmaterialblock angeordnet ist, dadurch g e k e n n - z e i c h n e t , daß bezogen auf eine Tangente (9) an den mittleren Umfangskreis (3) der Reibfläche (2) (Bezugstangente) die beiden sich quer über die Reibfläche (2) erstreckenden Kanten (14, 15) des Reibmaterialblockes (16) mit Abstand zu beiden Seiten des durch den Berührungspunkt (8) der Bezugstangente (9) mit dem mittleren Umfangskreis (3) gezogenen Radius (6) verlaufen und daß bezogen auf die Hauptdrehrichtung (13) der Bremsscheibe (1) zumindest die einlaufseitige Kante

Telefon: (02 21) 38 02 38 · Telegramm: Inventator Köln · Telex: 8 883 555 max d
Postscheckkonto Köln (BLZ 370 100 50) Kto.-Nr. 152 51-500 · Deutsche Bank AG Köln (BLZ 370 700 60) Kto.-Nr. 123 618 1

(14, 17) des Reibmaterialblockes (16) wenigstens mit dem größeren Teil ihrer Länge im wesentlichen unter einem Winkel ß < 90° gegenüber der Bezugstangente (9) in Hauptdrehrichtung (13) geneigt ausgerichtet ist.

2. Reibbacke nach Anspruch 1, dadurch g e k e n n - z e i c h n e t , daß der Neigungswinkel ß gegenüber der Bezugstangente (9) 85 - 45°, vorzugsweise 70 - 55° beträgt.

3. Reibbacke nach Anspruch 1 und 2, dadurch g e - k e n n z e i c h n e t , daß auch die auslaufseitig sich quer über die Reibfläche (2) der Bremsscheibe (1) erstreckende Kante (15, 18) des Reibmaterialblockes (16) gegenüber der Bezugstangente (9) wenigstens mit dem größeren Teil ihrer Länge im wesentlichen in Hauptdrehrichtung geneigt ausgerichtet ist.

4. Reibbacke nach Anspruch 3, dadurch g e k e n n - z e i c h n e t , daß die Einlaufkante (14, 17) und die Auslaufkante (15, 18) des Reibmaterialblockes (16) hinsichtlich ihrer Neigung im wesentlichen parallel zueinander verlaufen.

5. Reibbacke nach einem der Ansprüche 1 bis 4, dadurch g e k e n n z e i c h n e t , daß die beiden anderen Kanten (19, 20) des Reibmaterialblockes (16) geradlinig sind und parallel zueinander verlaufen.

6. Reibbacke nach einem der Ansprüche 1 bis 5, dadurch g e k e n n z e i c h n e t , daß die Trägerplatte (21) im wesentlichen die gleiche Umfangskontur wie der Reibmaterialblock aufweist.

7. Reibbacke nach einem der Ansprüche 1 bis 6, dadurch g e k e n n z e i c h n e t , daß die Trägerplatte (21) in an sich bekannter Weise im wesentlichen aus einer Hartkeramikplatte (23) mit einer Schutzabdeckung (24) der Rückenfläche aus Metall besteht.

Fig.1

Fig.2

Fig.3

Fig.4

Fig.6

Fig. 5

Fig.7

0061107

FIG.8

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | DE-A-2 209 504 (AUDI NSU AUTO UNION) <br> * Insgesamt; Figuren 1-3 * | 1-6 | F 16 D 65/02 <br> F 16 D 69/00 |
| X | DE-A-1 525 385 (ALFRED TEVES) <br> * Seite 4, Absatz 4 - Seite 5, Absatz 1; Figur 3 * | 1-4 | |
| X | FR-A-2 192 660 (SOCIETE ANONYME D.B.A.) <br> * Insgesamt; Figuren 1-3 * | 1-3 | |
| X | DE-B-1 287 954 (THE BUDD COMPANY) <br> * Spalte 2, Absatz 3 - Spalte 3, Absatz 3; Figur 7 * | 1-3 | |
| X | DE-A-1 480 028 (SOC. AN. ANDRE CITROEN) <br> * Insgesamt; Figuren 1-8 * | 1-3 | RECHERCHIERTE SACHGEBIETE (Int. Cl. ³) <br><br> F 16 D |
| A | DE-A-2 935 943 (STAHL KURT) <br> * Insgesamt; Figuren 1-11 * | 7 | |
| A | DE-A-1 425 228 (DUNLOP RUBBER CO.) <br> * Seite 5, Absatz 3 - Seite 6, Absatz 2; Figuren 1,3,5,6 * | 1 | |

Der vorliegende Recherchenbericht wurde für alle Patentansprüche erstellt.

| Recherchenort DEN HAAG | Abschlußdatum der Recherche 14-07-1982 | Prüfer BRAEMS C.G.I. |
|---|---|---|

Europäisches
Patentamt

**EUROPÄISCHER RECHERCHENBERICHT**

## EINSCHLÄGIGE DOKUMENTE

| Kategorie | Kennzeichnung des Dokuments mit Angabe. soweit erforderlich, der maßgeblichen Teile | Betrifft Anspruch | KLASSIFIKATION DER ANMELDUNG (Int. Cl. ³) |
|---|---|---|---|
| A | US-A-4 243 123 (MAMORU WATANABE) <br> * Spalte 2, Zeilen 59-65; Figur 4 * <br><br> ----- | 1 | |

RECHERCHIERTE
SACHGEBIETE (Int. Cl. ³)

Der vorliegende Recherchenbericht wurde für alle Patentansprüche erstellt.

| Recherchenort <br> DEN HAAG | Abschlußdatum der Recherche <br> 14-07-1982 | Prüfer <br> BRAEMS C.G.I. |
|---|---|---|